# EUROPÄISCHE PATENTSCHRIFT

(11) **EP 0 842 305 B1**
(45) Veröffentlichungstag und Bekanntmachung des Hinweises auf die Patenterteilung: **24.11.1999**
(21) Anmeldenummer: 96907984.7
(22) Anmeldetag: 15.04.1996
(51) Int. Cl.: C22B 21/04, C22B 21/02, C22B 5/10, C22B 5/16, C22B 7/02, C22B 7/04

(54) **VERFAHREN ZUR BEHANDLUNG VON FILTERASCHEN, DIE BEI DER ABFALLENTSORGUNG ANFALLEN**
PROCESS FOR TREATING FILTER ASHES ARISING FROM WASTE TREATMENT
PROCEDE DE TRAITEMENT DE CENDRES ISSUS DU TRAITEMENT DE DECHETS

(30) Priorität: 13.04.1995 CH 107395
(43) Veröffentlichungstag der Anmeldung: 20.05.1998
(73) Patentinhaber: Refista Recycling AG, 4456 Tenniken (CH)
(72) Erfinder: GRAUWILLER, Markus, 3066 Stettlen (CH)
(74) Vertreter: BOVARD AG - Patentanwälte
(86) Internationale Anmeldenummer: CH9600136
(87) Internationale Veröffentlichungsnummer: WO9632516

(56) Entgegenhaltungen:
- GB-A- 968 014
- US-A- 4 188 207
- US-A- 4 430 120
- US-A- 4 724 054
- US-A- 4 761 207
- US-A- 4 770 696
- US-A- 4 812 168
- US-A- 5 498 320

## Beschreibung

Die vorliegende Erfindung betrifft ein Verfahren zur Behandlung von Filteraschen, die bei der Abfallentsorgung anfallen, insbesondere durch eine zweistufige Reduktion der enthaltenen Metallverbindungen, wobei wiederverwertbare metall- und siliciumhaltige Legierungen gewonnen werden.

Für die Verminderung der Schadstoffbelastung in der Umgebung von Kehrichtverbrennungsanlagen sind diese mit sogenannten Rauchgasreinigungsfiltern ausgerüstet. Der bei diesen Anlagen anfallende Staub und Produkte aus der weitergehenden Rauchgasreinigung sind stark schwermetallbelastet und daher giftig, siehe Tabelle 1. Gegenwärtig werden die genannten Filteraschen durch herkömmliche nasschemischen Recyclingverfahren behandelt, damit die erwähnten toxischen Stoffe für die Wiederverwendung gewonnen werden können.

Für die beschriebenen Rückstände, Aschen und Stäube sind heute an sich drei Behandlungsprinzipien bekannt:
a) Die Immobilisierung bzw. Verfestigung der toxischen Filteraschen zu nicht auslaugbaren Stoffen wobei die Schwermetalle immer noch in der giftigen, ionischen Form vorliegen. Dazu gehören Verfestigungsmethoden mit vorzugsweise Zementen oder Tonen. In diese Kategorie gehören aber auch thermische (Schmelz)-Verfahren bei denen die Metalle in eine stabile auslaugsichere Glasmatrix eingebettet werden.
b) Extraktion der Schwermetalle aus der grösstenteils inerten Matrix mittels geeigneter Auswasch- bzw. Destillations-Verfahren und gesonderter Behandlung der Eluate bzw. Destillate. Die von Schwermetallen abgereicherte inerte Matrix kann einer Wiederverwertung zugeführt werden, falls die toxischen organischen Verbindungen vorgängig zerstört wurden. Die abgetrennten Metallverbindungen sind immer noch toxisch und gelten als Sonderabfall, können also nicht ohne weitere Konditionierung entsorgt werden.
c) Reduktion der Schwermetallionen zu Metallen. Dabei werden aus toxischen Stoffen und Verbindungen metallische Produkte, die wieder zum Einsatz gelangen können. Ein bekanntes Verfahren dieser Art verarbeitet Verbrennungsrückstände in einer Eisenschmelze zuerst oxidativ, dann reduktiv bei Temperaturen über 1 300°C bzw. über 1 450°C.

Wegen des rückläufigen Marktes für Schwermetalle und den energieintensiven aufwendigen Prozessen sind gegenwärtig derartige Verfahren aus wirtschaftlichen Gründen wenig attraktiv. Im weiteren liegen teilweise die Komponenten auch nach der Behandlung weiterhin in einer toxischen Form vor. Es besteht demzufolge ein Bedürfnis nach anderen Lösungen zur Entsorgung von Filteraschen, die frei von den genannten Nachteilen sind, und die eine wirtschaftliche und umweltgerechte Wiederverwertung der toxischen und umweltrelevanten Komponenten erlauben.

Es wurde gefunden, dass die genannten Rückstände wirtschaftlich behandelt werden können, wenn sie im Aluminiumofen einer Schmelzelektrolyse unterworfen werden. Damit weniger elektrische Energie benötigt wird, wurde weiter gefunden, dass die Schwermetalle ökonomisch günstig mit einer vorgeschalteten Reduktion durch Kohlenstoff reduziert und gewonnen werden können.

Gegenstand der vorliegenden Erfindung ist somit ein Verfahren zur Behandlung von Filteraschen, die als Rückstände bei der Abfallentsorgung anfallen und die mit Schwermetallen und/oder Schwermetallverbindungen belastet sind, durch eine zweistufige Reduktion der enthaltenen Metallverbindungen unter Bildung von wiederverwertbaren Metallen und metall- und/oder siliciumhaltigen Legierungen, welches Verfahren die in der Kennzeichnung des Patenanspruches 1 angegebenen Merkmale besitzt.

Das erfindungsgemässe Verfahren führt bei der Reduktion von von Filteraschen, in zwei Stufen zu folgenden Vorteilen:
- Es ist auf vielerlei Filteraschen anwendbar,
- Anstelle von Produkten, die in Deponien endzulagern sind, werden aus Sonderabfällen grösstenteils marktgängige Produkt gewonnen, nämlich silicium- und metallhaltige Legierungen, die u.a. im Automobilbau und in der Stahlindustrie als Desoxidationsmittel eingesetzt werden können und dort in grossen Mengen benötigt werden, aber auch als Primärstoffe selbst Verwendung finden.
- Die toxischen Schwermetalle werden nicht nur mehr oder weniger fest in eine Matrix gebunden wie bei den Immobilisierungsverfahren, sondern in eine ungiftige reduzierte Form gebracht.
- Die Herabsetzung der Schmelztemperatur der Verbrennungsrückstände durch geeignete Substanzen spart Energie.
- Der grösste Stromzehrer bei der elektrischen Reduktion ist Silicium, vergl. Tabelle 1, das praktisch 80 Prozent des Reduktionsstromes ausmacht. Wird Silicium mit günstiger Kohle und/oder Calciumcarbid reduziert, so wird das Verfahren ökonomischer und wirtschaftlich wesentlich interessanter, da teurer Strom eingespart werden kann.
- Die in der Abgasreinigung eingesetzten Materialien, Koks, Kohlestaub oder Aktivkohle dienen nach Beladung als Reduktionsmittel.
- Die entstehenden Schlacken können mit Stoffen versetzt werden, welche genau die Eigenschaften ergeben, die einem potentiellen Abnehmer entsprechen.

Vorteilhaft werden die magnetischen Partikeln zuerst mittels starken Magneten aus den vorgereinigten Filteraschen oder andern Rückständen befreit. Das Material wird vorzugsweise getrocknet. Dabei kann der Trocknungsvorgang so gesteuert werden, dass je nach Erfordernis die leichtflüchtigsten Verbindungen und Elemente abdestilliert werden. Die Entfernung magnetischer Partikel dient dazu, das Endprodukt hauptsächlich von Eisen zu befreien, da dieses sich im Endprodukt, vor allem in der Alulegierung, qualitätsmindernd auswirkt. Wird Eisen aber als Ferrosilicium abgetrennt, so stört es nicht. Die Trocknung vor der Reduktion hat den Zweck, Wasser zu entfernen, das an der Anode zu mindestens teilweise unerwünschter Fluorwasserstoffentwicklung führt. Unter gewissen Umständen kann Wasserstoff auch zur Reduktion dienen.

Im ersten Reduktionsschritt wird die Filterasche normalerweise mit Kohle und/oder Carbid und anschliessend gegebenenfalls mit einer, die Schmelztemperatur der Asche herabsetzenden Substanzmischung versetzt und in den Reaktor gegeben. Kohle steht im folgenden für Kohle, Kohlestaub, Koks, Anthrazit oder Holzkohle, als Carbid kommt beispielsweise Calciumcarbid in Frage. Die erste Reduktionsstufe findet vorzugsweise in fester Form statt. Die grosse spezifische Oberfläche von Filterasche ist gut für Festkörperreaktionen geeignet

Werden vor, während oder nach dem ersten Reduktionschritt AlkaliOxide, Alkali-Borate oder Mischungen davon bis zu einem Gehalt von 2 bis 20 Gew,% zugegeben, die bekanntlich die Schmelztemperatur von Glas herabsetzen, kann erreicht werden, dass das Schmelzen der Glaspartikel in Filterasche in der zweiten Reduktionsstufe bei tieferen Temperaturen stattfindet, was den Energieverbrauch reduziert und weniger flüchtige Substanzen abdestillieren lässt.

Abdestillierte Anteile der Metalle oder Metallverbindungen von Zink, Blei, Zinn, Cadmium und Quecksilber können zurückkondensiert werden. Als Adsorbens kommt Koks, Kohlestaub oder Aktivkohle in Betracht, die nach dem Einsatz als Reduktionsmittel zum Einsatz gelangen . In dieser ersten Stufe werden die edleren, mit Kohle reduzierbaren Elemente, namentlich die nicht verdampften Anteile, Kupfer, Nickel, Blei, Eisen, Zink und Silicium reduziert. Die Reduktion geschieht vorzugsweise in einem Reaktor, der mittels fossilen Brennstoffen, z.B. mit Kohle, Öl oder einem Lichtbogen auf die erforderliche Temperatur aufgeheizt wird. Die Kohle und das Carbid dienen dabei als Reduktionsmittel und können die in Tabelle 2 bezeichneten Stoffe reduzieren . Die verbleibenden, elektrisch weiter reduzierbaren unedlen Elemente in der Schlacke bestehen grösstenteils aus Aluminiumoxiden. Die eben bezeichneten Elemente aus den Rückständen werden in einer zweiten Reduktionsstufe mittels elektrischem Strom reduktiv aus einer eutektischen Salzschmelze gewonnen. Diese ist aus der Aluminiumgewinnung bekannt und besteht aus Kryolith. Durch die Zugabe von Natriumfluorid und/oder -chlorid, Magnesium- oder Aluminiumfluoriden werden die Elektrolytbedingungen insbesondere die Leitfähigkeit so gesteuert, dass sich durch die elektrischen Widerstandsverluste eine optimale Bad-Temperatur vorzugsweise zwischen 800 und 1 300°C ergibt. Die gesteuerte Zugabe dieser Zusätze erlaubt eine Optimierung der Löslichkeit der Filterasche in der Schmelze. Eine Schmelzelektrolyse ohne Zusätze erhöht die Temperatur der Schmelze und damit auch den Energieverbrauch. Die Menge der nichtreduzierbaren Abfallstoffe wird dabei vermindert. Erhöhte Zusatzmengen hingegen vermindern die Schmelztemperatur und damit den Energieverbrauch, führen jedoch zu einer Erhöhung der Menge der nichtreduzierbaren Abfallprodukte. Die Menge der beigefügten Zusatzstoffe ist den zu behandelnden Abfallstoffen und der zur Verfügung stehenden Energie anzupassen. Die nicht reduzierbaren Stoffe und Verbindungen können als Schlacke, entweder flüssig oder fest, abgezogen und je nach weiterem Verwendungszweck, unter Umständen noch im flüssigen Zustand, mit zusätzlichen Verbindungen oder Elementen versetzt werden, welche Eigenschaften ergeben, die den Wünschen eines potentiellen Abnehmers entsprechen. Der Reaktor der beiden Reduktionsstufen kann ein entsprechend adaptiertes Schmelzbad sein, ähnlich wie es in der Aluminiumindustrie zur Anwendung kommt, bei Bedarf kann noch eine zusätzliche Heizung für die erste Reduktionsstufe vorgesehen werden. Werden die beiden Reduktionen getrennt ausgeführt, kann der Reaktor der ersten Stufe aus einem Schmelztiegel, einem Hochofen oder einem Wirbelbettofen bestehen, die Energie stammt aus der Oxidation des Reduktionsmittels, kann aber auch durch zusätzliche, teils externe Wärmequellen erhalten werden.

Durch die beschriebene, zweistufige Prozessführung, erste Reduktion mit Kohle und/oder Calciumcarbid bis zum Redoxpotential von Silicium, zweite Reduktion mit elektrischem Strom bis zum Aluminium, wird eine Wiederverwertung der Metalle sowie des Siliciums ermöglicht. Das erfindungsgemässe Verfahren kann alle Elemente und Metalle in reduzierter, ungiftiger Form zurückgewinnen, die edler bzw. gleich edel wie Aluminium sind und nicht vorzeitig durch Abdampfen oder Abdestillieren ihrer flüchtigen Verbindungen entweichen. Das Verfahren zeichnet sich somit dadurch aus, dass es viele toxische Schwermetall/Metallverbindungen erneut als ungiftige metallische bzw. siliciumhaltige Legierung in den Stoffkreislauf zurückbringt. Die erfindungsgemässe, zweistufige Prozessführung ermöglicht eine wesentliche Verfahrensverbesserung gegenüber einer einstufigen, nur mit Elektrizität allein realisierten, Schmelzelektrolyse, braucht sie doch nur noch ca. 15 Prozent der elektrischen Energie welche bei einer einstufigen elektrischen Reduktion der gesamten Rückstände vonnöten wäre. Es ergibt sich somit eine fast 80prozentige Stromeinsparung und daher ein wirtschaftlich wesentlich besseres Verfahren. Bis heute existiert für Filterasche und Analoga kein Reduktionsverfahren, das unedle Elemente mit so tiefem Redoxpotential wie Aluminium zu reduzieren im Stande wäre. Gleichzeitig kann das erfindungsgemässe Verfahren allfällige organische Substanzen auf oxidativem Weg zerstören.

Die entstehenden Schlacken hauptsächlich nach der zweiten Reduktion, aber auch die Produkte aus der getrennt ausgeführten ersten Reduktionsstufe können mit denjenigen Zusätzen ergänzt werden, die noch fehlen, um eine Verwendung in der Zementindustrie als Rohstoffe zu ermöglichen. Je nach Marktsituation können in die schmelzflüssige Schlacke beispielsweise auch Glasbildner wie Eisen- oder Silicium-Oxide zugegeben werden um die Schlakken konform mit den jeweiligen gesetzlichen Bestimmungen zu machen.

**Tabelle 1:**

| Zusammensetzung einer typischen Elektrofilterasche | | | | | |
|---|---|---|---|---|---|
| Element | Prozent | Wertigkeit | Mol-Gew. | Mol | Elektonenäquivalente |
| Magnesium | 1.20 | | | | |
| Natrium | 2.70 | | | | |
| Calcium | 8.40 | | | | |
| Kalium | 4.40 | | | | |
| Barium | 0.20 | | | | |
| Kupfer | 0.17 | 2 | 65.5 | 0 026 | 0.052 |
| Blei | 1.20 | 2 | 207.2 | 0.058 | 0.116 |
| Zinn | 0.16 | 4 | 118.7 | 0.013 | 0.054 |
| Nickel | 0.03 | 2 | 58.7 | 0.005 | 0.010 |
| Cadmium | 0.04 | 2 | 112.4 | 0.004 | 0.007 |
| Eisen | 2.50 | 3 | 55.8 | 0.448 | 1.344 |
| Chrom | 0.10 | 3 | 52.0 | 0.019 | 0.058 |
| Zink | 3.60 | 2 | 65.4 | 0.550 | 1.101 |
| Silicium | 28.00 | 4 | 28.0 | 10.00 | 40.00 |
| Mangan | 0.16 | 2 | 54.9 | 0.029 | 0.058 |
| Aluminium | 6.80 | 3 | 27.0 | 2.519 | 7.560 |
| Sulfat | 4.70 | | | | |
| Gesamt C | 2.30 | | | | |
| Sauerstoff, Wasserstoff | 20.18 | | | | |
| Carbonat C | 0.16 | | | | |
| Schwefel | 4.80 | | | | |
| Chlorid | 8.20 | | | | |
| **Total** | **100.00** | | | | **50.36** |

Die Tabelle zeigt Daten zu Elektrofilterasche. Die Prozentangaben über die Zusammensetzung stammen aus dem BUS-Bericht No 62 (BUS = Bundesamt für Umweltschutz; Nachfolgeorganisation: Bundesamt für Umwelt, Wald und Landschaft, Bern Schweiz).

Die vollständig ausgefüllten Reihen, beginnend mit Kupfer, endend mit Aluminium, enthalten die Elemente, die reduziert werden können. Die Elemente Magnesium bis Barium werden bei der Aluminiumreduktion nicht reduziert und verbleiben in einer an Schwermetallen abgereicherten Schlacke. Angegeben ist zudem die Wertigkeit (es treten auch andere auf) der Elemente und die Anzahl Mol pro Kilogramm Asche. Aus diesen Angaben lassen sich die Elektronenaequivalente berechnen, die zur Reduktion nötig sind. Silicium verbraucht die meisten Elektronen, fast 80 Prozent.

**Tabelle 2:**

| Metallgehalt einer typischen Elektrofilterasche unter Angabe des jeweiligen Reduktionsmittels | | | | |
|---|---|---|---|---|
| Element | Prozent | Reduktion mit | Elektonenäquivalente | % Anteil |
| Kupfer | 0.17 | Kohle | 0.052 | 0.1 |
| Blei | 1.20 | Kohle | 0.116 | 0.2 |
| Zinn | 0.16 | Kohle | 0.055 | 0.1 |
| Nickel | 0.03 | Kohle | 0.010 | 0.02 |
| Cadmium | 0.04 | Kohle | 0.007 | 0.01 |
| Eisen | 2.50 | Kohle | 1.344 | 2.7 |
| Chrom | 0.10 | Strom | 0.058 | 0.1 |
| Zink | 3.60 | Kohle | 1.101 | 2.2 |
| Silicium | 28.00 | Kohle | 40.000 | 79.4 |
| Mangan | 0.16 | Strom | 0.058 | 0.1 |
| Aluminium | 6.80 | Strom | 7.556 | 15.0 |
| **Total** | **42.7** | | **50.360** | **100.0** |

Die Tabelle zeigt Daten zu Elektrofilterasche. Die Prozentangaben über die Zusammensetzung stammen aus dem BUS-Bericht No 62.

Von den dargestellten reduzierbaren Elementen, sortiert nach fallendem Redoxpotential, gelingt es, rund 85 Gewichtsprozente mit der günstigeren Kohle und/oder Calciumcarbid zu reduzieren, der Rest, etwa 15 % muss schmelzelektrolytisch reduziert werden. Silicium verbraucht dabei die meisten Elektronen, fast 80 Prozent. Die Einführung der Kohlereduktions-Stufe vermindert den Stromverbrauch markant und macht das Verfahren wesentlich kostengünstiger und wirtschaftlicher. Chrom kann nicht mittels Kohle reduziert werden, weil bei der erforderlichen Temperatur auch Carbide gebildet werden.

### Beispiel:

1000 g einer getrockneten Elektrofilterasche einer Kehrichtverbrennungsanlage werden in einem Laborversuch, zusammen mit Holzkohle, in einen Reaktor gegeben und erwärmt. Dabei spielt sich folgende Reaktion in der pulverförmigen Filterasche ab:

164.89 kcal + SiO₂ + 2C → Si + 2CO.

Bei genügend langer Reaktionszeit und -Temperatur dampfen die flüchtigen Elemente wie Blei, Cadmium, und Zink ab und werden teilweise durch Kondensation in einer Kühlfalle zurückgewonnen.

Der Rückstand enthält die grösstenteils reduzierten, nichtflüchtigen Elemente in Pulverform, die etwa den Werten gemäss Tabelle 2 entsprechen. In oxidischer Form bleibt hauptsächlich Aluminium zurück.

Das so erhaltene Material wird in der zweiten Reduktionsstufe mittels elektrischem Strom reduktiv aus einer aus der Aluminiumgewinnung bekannten eutektischen Salzschmelze gewonnen, die aus Kryolith und weiteren in der Aluminiumgewinnung eingesetzten Substanzen wie Aluminiumfluorid und Natriumfluorid besteht.

Die Reduktion im Aluminiumofen benötigt bei einem Filterasche/Aluminiumoxid-Verhältnis von 40/60 ca. 20 Gew% Fluorid (als Na₃AlF₆ + AlF₃) bezogen auf die Legierung. Dabei werden die nicht reduzierbaren Anteile (siehe Tabelle 1) in flüssiger Form als Schlacke abgezogen und die entstandene Legierung mittels einem Sauggerät aus dem Schmelz-Reduktionsbad abgesogen.

Alternativ wird die zweite Reduktionstufe in einer Schmelze mit verminderten Mengen von aus der Aluminiumindustrie bekannten Zusätzen durchgeführt, bzw. sogar nur mit den geschmolzenen Rückständen der ersten Reduktionsstufe allein durchgeführt. Die Schmelze ohne Zusätze hat dann eine Temperatur von ca. 1450°C ± 80°C, abhängig von der zum Einsatz gelangenden Filterasche.

## Patentansprüche

1. Verfahren zur Behandlung von Filteraschen, die als Rückstände bei der Abfallentsorgung anfallen und die mit Schwermetallen und/oder Schwermetallverbindungen belastet sind, durch eine zweistufige Reduktion der enthaltenen Metallverbindungen unter Bildung von wiederverwendbaren metall- und siliciumhaltigen Legierungen, dadurch gekennzeichnet, dass
a) eine erste Reduktionstufe unter Verwendung von Kohlenstoff oder kohlenstofferzeugenden Mitteln als Reduktionsmittel unter solchen Bedingungen durchgeführt wird, dass die Verbindungen von Silicium und Metallen, die ein Normalpotential besitzen, das grösser ist als dasjenige von Silicium, reduziert werden, die erhaltenen Metalle abgetrennt werden und anschliessend der Rückstand, der Aluminium in oxidierter Form enthält, in eine Salzschmelze übergeführt wird und
b) die erhaltene Salzschmelze, die Aluminium in oxidierter Form enthält, einer zweiten Reduktionsstufe unterworfen wird, indem unter Gewinnung von Aluminium eine Schmelzelektrolyse durchgeführt wird, wobei eine Aluminium und Silicium enthaltende Schmelze erhalten wird.

2. Verfahren nach Anspruch 1, dadurch gekennzeichnet, dass in der ersten Reduktionsstufe Kohle, Koks, Holzkohle, Sägemehl, Carbidverbindungen oder Mischungen davon als Reduktionsmittel verwendet werden.

3. Verfahren nach Anspruch 1 oder 2, dadurch gekennzeichnet, dass den zu behandelnden Rückständen für die zweite Reduktionsstufe ein den Schmelzpunkt herabsetzendes Substanzgemisch zugesetzt wird, beispielsweise Alkali-Oxide und/oder Alkali-Borate, vorzugsweise bis zu 20 Gew.% bezogen auf das Gesamtgewicht.

4. Verfahren nach einem der Ansprüche 1 bis 3, dadurch gekennzeichnet. dass in der zweiten Reduktionsstufe der in der ersten Reduktionsstufe von den reduzierten Metallen befreite Rückstand in eine vorwiegend aus Kryolith und NaF bestehende Salzschmelze übergeführt wird.

5. Verfahren nach einem der Ansprüche 1 bis 4, dadurch gekennzeichnet. dass die während dem ersten Reduktionsschritt entweichenden flüchtigen Metalle, Verbindungen. Dämpfe und Salze im Gegenstrom von Koks. Kohlenstaub, Filterasche oder Aluminiumoxid adsorbiert werden und anschliessend teilweise in die Reduktionskammer zurückgebracht werden und teilweise, soweit es sich um Metalle handelt, vom Reaktionssystem weggeführt werden.

6. Verfahren nach einem der Ansprüche 1 bis 5, dadurch gekennzeichnet, dass die Salzschmelze, die über der Aluminiumschmelze vorliegt und in welcher sich Elemente und Verbindungen befinden, die nicht reduziert werden und in Aluminium nicht löslich sind, im Reaktor gesammelt und anschliessend von der Aluminiumschmelze abgeschieden wird.

7. Verfahren nach einem der Ansprüche 1 bis 6, dadurch gekennzeichnet, dass die als Ausgangsmaterial verwendeten Rückstände mittels eines starken Magneten von magnetischen Verbindungen befreit werden, gegebenenfalls auch nach der ersten Reduktionsstufe und einer Verkleinerung der Rückstände.

8. Verfahren nach einem der Ansprüche 1 bis 7, dadurch gekennzeichnet, dass das Ausgangsmaterial vorgetrocknet wird.

9. Verfahren nach einem der Ansprüche 1 bis 8, dadurch gekennzeichnet, dass die als Ausgangsmaterial verwendeten Rückstände vor der Reduktion erwärmt werden, um flüchtige Metallhalogenide und Elemente wie Quecksilber und Cadmium abzudampfen und abzuscheiden.

10. Verfahren nach einem der Ansprüche 1 bis 9, dadurch gekennzeichnet, dass der Salzschmelze für die Schmelzelektrolyse als weitere Zusätze Natriumchlorid und/oder Aluminiumfluorid zugegeben werden, welche über die Leitfähigkeit die elektrische Wärmeerzeugung so steuern, dass die Badtemperatur zwischen 800 und 1 300°C liegt, und welche die Löslichkeit der Filterasche in der Schmelze erhöhen, sowie die Bedingungen im Reaktor so eingestellt werden, dass die entstehenden metall- und/oder siliciumhaltigen Legierungen in ihren Eigenschaften einer weiteren Verwendung optimal angepasst werden.

11. Verfahren nach einem der Ansprüche 1 bis 10, dadurch gekennzeichnet, dass die erste Reduktionsstufe örtlich getrennt oder örtlich gekoppelt von der zweiten Reduktionsstufe stattfindet.

12. Verfahren nach einem der Ansprüche 1 bis 11, dadurch gekennzeichnet, dass Eisen, und/oder Ferrosilicium und/oder Silicium oder weitere Legierungen separat aus der ersten Reduktionsstufe abgezogen werden.

13. Verfahren nach einem der Ansprüche 1 bis 12, dadurch gekennzeichnet, dass der Rückstand nach der ersten Reduktionsstufe in einen industriell betriebenen Aluminium-Schmelzelektrolyseofen übergeführt wird, wobei die zweite Reduktionsstufe gemeinsam mit den üblichen Ausgangsmaterialien für die Aluminiumproduktion und gemäss den hierzu erforderlichen Bedingungen durchgeführt wird.

14. Verfahren nach einem der Ansprüche 1 bis 12, dadurch gekennzeichnet, dass der Rückstand nach der ersten Reduktionsstufe und vor der zweiten Reduktionsstufe einer Anreicherung mit verschiedenen Stoffen oder Verbindungen unterzogen wird, wie beispielsweise mit Metallen, Schrott, Schlämmen, Stäuben, Aluminiumoxid oder Tonerde und/oder andere Stoffe abgereichert werden.

15. Verfahren nach einem der Ansprüche 1 bis 14, dadurch gekennzeichnet, dass die nicht reduzierbare Schlacke, welche nach der Schmelzelektrolyse anfällt, dem Reaktor in fester oder flüssiger Form entnommen wird und ihr Glasbildner oder Verbindungen und Elemente zugefügt werden, welche die Schlacke einem Einsatz als Zementrohstoff anpasst.

## Claims

1. Process for treatment of filter ashes, which arise as residues during waste disposal and which are polluted with heavy metals and/or heavy metal compounds, through a two-stage reduction of the contained metal compounds with formation of reusable metal-containing and silicon-containing alloys,
characterised in that
a) a first reduction step is carried out using carbon or carbon-generating means as the reduction means under conditions such that the compounds of silicon and metals, which have a standard potential which is greater than that of silicon, are reduced, the metals obtained are separated, and subsequently the residue, which contains aluminium in oxidised form, is converted to a salt melt, and
b) the obtained salt melt, which contains aluminium in oxidised form, is subjected to a second reduction stage, in that a fused salt electrolysis is carried out with extraction of aluminium, a melt containing aluminium and silicon being obtained.

2. Process according to claim 1, characterised in that in the first reduction step coal, coke, charcoal, sawdust, carbide compounds or mixtures thereof are used as reduction means.

3. Process according to claim 1 or 2, characterised in that for the second reduction step a mixture of substances to lower the melting point, for example alkali oxides and/or alkali borates, preferably up to 20 % by weight, with respect to the total weight, is added to the residues to be treated.

4. Process according to one of the claims 1 to 3, characterised in that in the second reduction step the residue liberated from the reduced metals in the first reduction step is transferred to a salt melt consisting pre-dominantly of cryolite and NaF.

5. Process according to one of the claims 1 to 4, characterised in that the volatile metals, compounds, vapours and salts escaping during the first reduction stage are adsorbed in the counter-current of coke, coal dust, filter ashes or aluminium oxide and subsequently brought back partially into the reduction chamber, and are partially removed from the reaction system, insofar as metals are concerned.

6. Process according to one of the claims 1 to 5, characterised in that the salt melt, which covers the aluminium melt and in which elements and compounds are to be found, which are not reduced and are not soluble in aluminium, is collected in the reactor and is subsequently separated from the aluminium melt.

7. Process according to one of the claims 1 to 6, characterised in that the residues used as the starting material are freed of magnetic com-pounds by means of a strong magnet, if necessary also after the first reduction stage and a reduction of the residues.

8. Process according to one of the claims 1 to 7, characterised in that the starting material is pre-dried.

9. Process according to one of the claims 1 to 8, characterised in that the residues used as the starting material are heated prior to the reduction in order to evaporate and separate volatile metal halides and elements such as mercury and cadmium.

10. Process according to one of the claims 1 to 9, characterised in that sodium chloride and/or aluminium fluoride are added as further additives to the salt melt for the fused salt electrolysis, which through the conductivity con-trol the electrical heat generation such that the bath temperature lies between 800 and 1300 °C, and which increase the solubility of the filter ashes in the melt, and the conditions in the reactor are adjusted such that the obtained metal and/or silicon-containing alloys in their properties are optimally suited to further use.

11. Process according to one of the claims 1 to 10, characterised in that the first reduction stage takes place locally separate from, or locally coupled to, the second reduction stage.

12. Process according to one of the claims 1 to 11, characterised in that iron, and/or silicon iron and/or silicon or further alloys are removed sep-arately out of the first reduction stage.

13. Process according to one of the claims 1 to 12, characterised in that the residue after the first reduction stage is conducted into an industrially operated aluminium-melt electrolytic furnace, the second reduction stage being carried out jointly with the usual starting materials for aluminium production and according to the necessary requirements therefor.

14. Process according to one of the claims 1 to 12, characterised in that the residue after the first reduction stage and before the second reduction stage is subjected to an enrichment with various substances or compounds, such as, for example, with metals, scrap, sludges, dusts, aluminium oxide or clay and/or other substances.

15. Process according to one of the claims 1 to 14, characterised in that the non-reducible slag, which accumulates after the fused salt electrolysis, is taken from the reactor in solid or fluid form, and added thereto are glass-forming substances or compounds and elements which make the slag suitable for use as raw material for concrete.

## Revendications

1. Procédé de traitement de cendres de filtrage obtenues, en tant que résidus, lors de l'élimination des déchets, et chargées de métaux lourds ou de leurs composés, ou des deux, par une réduction en deux étapes des composés métalliques qu'elles contiennent, avec formation d'alliages réutilisables de métaux et de silicium, caractérisé en ce que
une première étape de réduction, dans laquelle on utilise comme réducteurs du carbone ou des matières produisant du carbone, est exécutée dans des conditions telles que les composés de silicium et de métaux ayant un potentiel normal supérieur à celui du silicium soient réduits, que les métaux obtenus soient séparés, puis que le résidu, qui contient de l'aluminium sous une forme oxydée, soit amené à un bain de sels en fusion, et
le bain de sels en fusion obtenu, contenant de l'aluminium sous une forme oxydée, subit une deuxième étape de réduction par électrolyse ignée avec obtention d'aluminium, ce qui donne une masse en fusion contenant de l'aluminium et du silicium.

2. Procédé selon la première revendication, caractérisé en ce que, dans la première étape de réduction, on utilise, comme réducteurs, du charbon, du coke, du charbon de bois, de la sciure, des carbures ou des mélanges de ces produits.

3. Procédé selon la revendication 1 ou 2, caractérisé en ce que l'on ajoute aux résidus à traiter, pour la deuxième étape de réduction, un mélange de substances qui abaisse le point de fusion, par exemple des oxydes d'alcalis ou des borates d'alcalis, ou les deux, de préférence jusqu'à 20 % en poids par rapport au poids total.

4. Procédé selon l'une des revendications 1 à 3, caractérisé en ce que, dans la deuxième étape de réduction, le résidu débarrassé, lors de la première étape de réduction, des métaux réduits, est amené dans un bain de sels en fusion constitué principalement par de la cryolithe et du NaF.

5. Procédé selon l'une des revendications 1 à 4, caractérisé en ce que les métaux, composés, vapeurs et sels volatils qui s'échappent pendant la première étape de réduction sont adsorbés à contre-courant par du coke, de la poussière de charbon, des cendres de filtrage ou de l'oxyde d'aluminium, et que, ensuite, une partie en est renvoyée à la chambre de réduction et une partie, dans la mesure où il s'agit de métaux, est évacuée du système de réaction.

6. Procédé selon l'une des revendications 1 à 5, caractérisé en ce que le bain de sels en fusion qui se trouve au-dessus du bain d'aluminium en fusion, et dans lequel se trouvent des éléments et des composés qui ne sont pas réduits et ne sont pas solubles dans l'aluminium, est recueilli dans le réacteur puis séparé du bain d'aluminium.

7. Procédé selon l'une des revendications 1 à 6, caractérisé en ce que les résidus utilisés comme matière de départ sont débarrassés des composés magnétiques au moyen d'un fort aimant, le cas échéant, aussi, après la première étape de réduction et une réduction de la grosseur des résidus.

8. Procédé selon l'une des revendications 1 à 7, caractérisé en ce que la matière de départ subit un séchage préalable.

9. Procédé selon l'une des revendications 1 à 8, caractérisé en ce que les résidus utilisés comme matière de départ sont chauffés avant la réduction afin de vaporiser et de séparer les éléments volatils tels que le mercure et le cadmium.

10. Procédé selon l'une des revendications 1 à 9, caractérisé en ce que l'on ajoute comme additifs supplémentaires au bain de sels en fusion, pour l'électrolyse ignée, du chlorure de sodium ou du fluorure d'aluminium, ou les deux, qui, par la conductivité, commandent la production électrique de chaleur de telle manière que la température du bain soit comprise entre 800 et 1 300 °C, et qui augmentent la solubilité des cendres de filtrage dans le bain, et en ce que les conditions régnant dans le réacteur sont réglées de telle manière que les alliages de métaux ou de silicium, ou les deux, qui se forment, soient adaptés de façon optimale, par leurs propriétés, à une nouvelle utilisation.

11. Procédé selon l'une des revendications 1 à 10, caractérisé en ce que la première étape de réduction a lieu avec séparation locale ou couplage local par rapport à la deuxième étape de réduction.

12. Procédé selon l'une des revendications 1 à 11, caractérisé en ce que le fer, le ferrosilicium, le silicium ou les uns et les autres à la fois, ou d'autres alliages, sont retirés séparément de la première étape de réduction.

13. Procédé selon l'une des revendications 1 à 12, caractérisé en ce que le résidu obtenu après la première étape de réduction est amené à un four d'électrolyse ignée de l'aluminium, exploité de manière industrielle, la deuxième étape de réduction étant exécutée en commun avec les matières premières habituelles pour la production de l'aluminium et conformément aux conditions nécessaires à cet égard.

14. Procédé selon l'une des revendications 1 à 12, caractérisé en ce que, après la première étape de réduction et avant la deuxième, le résidu est soumis à un enrichissement avec différentes matières ou composés, comme, par exemple, des métaux, de la ferraille, des boues, des poussières, de l'oxyde d'aluminium, de l'alumine ou d'autres matières, ou les unes et les autres.

15. Procédé selon l'une des revendications 1 à 14, caractérisé en ce que le laitier et les scories non réductibles obtenus après l'électrolyse ignée sont retirés du réacteur sous forme solide ou liquide et qu'on leur ajoute des agents vitrifiants ou des composés et des éléments qui adaptent le laitier et les scories à l'emploi comme matière première pour le ciment.
